Europäisches Patentamt

European Patent Office

Office européen des brevets

(19)

(11) Numéro de publication : **0 132 418**
**B1**

(12) **FASCICULE DE BREVET EUROPÉEN**

(45) Date de publication du fascicule du brevet :
15.03.89

(51) Int. Cl.⁴ : **F 02 M 55/02**, B 23 P 15/00

(21) Numéro de dépôt : **84400969.6**

(22) Date de dépôt : **11.05.84**

(54) **Procédé de fabrication d'une rampe d'injection de carburant.**

(30) Priorité : **21.06.83 FR 8310251**

(43) Date de publication de la demande :
**30.01.85 Bulletin 85/05**

(45) Mention de la délivrance du brevet :
**15.03.89 Bulletin 89/11**

(84) Etats contractants désignés :
**AT BE CH DE FR GB IT LI LU NL SE**

(56) Documents cités :
**DE–A– 3 132 432**
**DE–B– 1 042 998**
**FR–A– 1 068 268**
**FR–A– 2 169 088**
**GB–A– 214 473**
**GB–A– 265 390**
**GB–A– 2 073 316**
**Le dossier contient des informations techniques présentées postérieurement au dépôt de la demande et ne figurant pas dans le présent fascicule.**

(73) Titulaire : **G. DE BRUYN OZOIR S.A.**
**4, rue Robert Schumann**
**F-77330 Ozoir La Ferrière (FR)**

(72) Inventeur : **De Bruyn, Gérard**
**72 bis avenue le Nôtre**
**F-92160 Antony (FR)**
Inventeur : **Ciecko, Daniel**
**11 avenue Thiers**
**F-77170 Brie Comte Robert (FR)**

(74) Mandataire : **Derambure, Christian et al**
**BUGNION ASSOCIES 55, rue Boissonade**
**F-75014 Paris (FR)**

EP 0 132 418 B1

Jouve, 18, rue St-Denis, 75001 Paris, France

## Description

L'invention concerne un procédé de fabrication de rampes d'injection de carburant.

Des rampes pour l'injection de carburant de la technique antérieure comportent habituellement un tube principal, de section rectangulaire ou circulaire, qui supporte trois ou quatre prises de carburant, deux ou trois supports d'ancrage et deux bouchons pour l'obturation du tube principal. Les ramples sont, en général, fabriquées en un métal qui est faiblement poreux et qui se soude facilement. En effet, selon le procédé de la technique antérieure, on commence à fabriquer un tube, de section rectangulaire ou circulaire, creux, et l'on soude les pièces d'axe orthogonal à l'axe longitudinal du tube principal. Le métal utilisé est de l'acier.

Cependant, un inconvénient principal d'une telle rampe montée et soudée est qu'il est nécessaire d'effectuer un décapage à l'acide pour détruire toutes les impuretés provenant de l'usinage, de l'assemblage. En outre, avant d'utiliser une telle rampe d'injection, il est nécessaire de procéder à des essais de pression pour éliminer les pièces qui sont défectueuses après soudure. Une rampe d'injection ne doit pas comporter de fuites après soudure, puisqu'elle est utilisée notamment dans l'industrie automobile où les normes de sécurité sont très strictes. Après l'essai de pression, le décapage est effectué à l'acide. Cependant, cet acide pénètre dans la matière et est susceptible d'attaquer la soudure. Les pièces deviennent alors défectueuses au bout de quinze jours à un mois, puisque comportant des fuites.

Enfin, les pièces qui sont correctes sont soumises à un procédé de protection, par exemple, un procédé électrolytique de zingage. Puis, la protection est neutralisée pour permettre une coloration et éviter à la longue une oxydation intérieure de la rampe d'injection.

Par conséquent, les rampes d'injection de la technique antérieure sont fabriquées selon un procédé comportant des étapes qui diminuent la qualité des pièces, telles que décapage, et ces pièces comportent, en outre, des soudures et lorsque les parties saillantes rapportées subissent des chocs, les soudures peuvent alors comporter des ruptures, ce qui entraîne la fuite du carburant.

Par ailleurs, il est nécessaire que les surfaces internes des rampes soient parfaitement lisses pour éviter la retenue des particules de saletés qui seraient susceptibles de se détacher de la pièce et ensuite d'être entraînées par le carburant pour venir boucher les buses d'injection.

On connaît également le brevet GB-A-265 390 qui concerne un procédé de fabrication d'un coude utilisable dans un cadre de bicyclette qui comporte les étapes suivantes : forgeage à chaud d'un bloc de métal entre deux moules ; nouveau chauffage de la pièce ; réalisation d'un perçage par forgeage à chaud ; pressage de la pièce préalablement chauffée entre deux autres moules, placés à angle droit par rapport aux premiers moules ; réalisation d'un autre perçage par forgeage à chaud, un mandrin étant introduit dans le premier perçage.

Le brevet FR-A-2 169 088 concerne une tubulure pour moteur diesel en matériau malléable (aluminium) réalisée par extrusion.

Le brevet GB-A-2073316, décrit (figures 4 et 5), une rampe d'injection de carburant ayant une prise et un support. Dans ce brevet, la rampe comporte deux conduits ; l'embout d'amenée du carburant, et le bouchon d'obturation d'extrémité ne sont pas décrits ou représentés ; la rampe est fabriquée par moulage par injection ou en coquille, avec un matériau constitutif non précisé.

La structure d'une rampe d'injection est tout à fait différente de celle d'un raccord pour cadre de bicyclette (brevet GB-A-265 390). Il est important que la rampe d'injection soit en un matériau malléable plutôt que rigide et puisse comporter des branchements, ce qui n'est pas possible avec le procédé du brevet FR-A-2 169 088.

Enfin, la technique du moulage n'est pas appropriée à l'invention (brevet GB-A-2 073 316).

Par conséquent, l'invention vise à pallier ces inconvénients.

Un but de l'invention est de fournir une rampe d'injection de carburant, de faible porosité, dépourvue de parties susceptibles de se fragiliser lors de chocs et d'entraîner des fuites.

Un autre but de l'invention est de fournir un procédé de fabrication d'une rampe d'injection de carburant simple et économique puisque ne comportant que quelques étapes.

Un but de l'invention est encore de fournir une rampe d'injection ne comportant pas de surface d'accrochage pour les saletés susceptibles de venir encrasser l'injecteur.

Pour parvenir à ce but, l'invention propose un procédé de fabrication d'une rampe d'injection de carburant comportant un tube creux principal, s'étendant longitudinalement, plusieurs prises d'injecteur, au moins un et généralement plusieurs supports d'ancrage, au moins un et généralement deux embouts de prise de carburant et un bouchon d'obturation du tube principal fixé sur celui-ci, caractérisé par le fait qu'il comporte la combinaison d'étapes successives suivantes : on frappe d'abord à chaud une billette en alliage d'aluminium placée dans une matrice, pour lui donner une forme primaire pleine longitudinale, comportant plusieurs branchements transversaux d'axes perpendiculaires à l'axe longitudinal de la forme primaire ; puis, on usine la pièce primaire pour lui donner sa forme définitive, y compris en forant la pièce primaire selon son axe longitudinal et les branchements transversaux pour former respectivement le tube creux, les prises et embouts ; on réalise un ébavurage électrolytique ou chimique ; enfin on soude le bouchon dans le même alliage que le tube creux afin d'obturer celui-ci à son extrêmité longitudinale par laquelle on a introduit le foret de manière à réaliser une rampe d'injection monobloc.

Ainsi, selon l'invention, on supprime complètement l'étape de soudage de pièces transversales sur une pièce longitudinale. Par conséquent, on supprime les risques de fuite aux soudures, lors de chocs.

Le procédé de fabrication selon l'invention est tel que la billette est constituée d'un alliage à base d'aluminium soudable, notamment un aluminium AG, AG3 ou AG5.

La billette est frappée à chaud.

L'étape d'usinage comporte au moins une étape de forage de la forme primaire, selon son axe longitudinal, pour former une pièce longitudinale creuse.

Enfin, l'usinage comporte notamment un ébavurage électrolytique ou chimique.

Lorsque la rampe d'injection de carburant, selon la présente invention est ainsi fabriquée, on termine la fabrication en plaçant un bouchon à l'extrémité libre de la pièce longitudinale, ce bouchon étant soudé en un métal, et ce afin d'obturer la pièce longitudinale creuse. On effectue enfin des découpes des pièces transversales pour leur donner leur forme finale.

La rampe d'injection de carburant ainsi fabriquée est telle que les intersections de la pièce longitudinale creuse avec les pièces transversales sont arrondies intérieurement et extérieurement. Ainsi, les saletés ne peuvent se nicher à l'intérieur de la pièce longitudinale creuse, et les saletés ne peuvent venir boucher les injecteurs.

La rampe selon la présente invention ne comporte qu'une seule soudure pour obturer la pièce longitudinale.

Une telle rampe en aluminium ne comportant pas d'autre soudure que celle du bouchon et qui est frappée, à chaud, à un poids qui est environ la moitié du poids d'une rampe en acier soudé fabriquée selon la technique antérieure.

Enfin, la rampe selon l'invention étant constituée d'un métal inoxydable, tel que l'aluminium, il n'est pas nécessaire d'effectuer de revêtement de protection, et de ce fait, il n'est pas nécessaire d'effectuer un décapage. Ces deux étapes étant supprimées, on supprime les risques de fuite.

La description suivante, en regard des dessins annexés à titre d'exemple non limitatif permettra de comprendre comment l'invention peut être mise en pratique.

La figure 1 est une vue en coupe partielle d'une rampe d'injection de carburant, selon l'invention,

la figure 2 est une vue en coupe selon la ligne I-I de la rampe de la figure 1,

la figure 3 est une vue en coupe selon la ligne II-II de la rampe de la figure 1,

la figure 4 est une vue en coupe selon la ligne III-III de la rampe de la figure 1,

la figure 5 est une vue en coupe selon la ligne IV-IV de la rampe de la figure 1,

la figure 6 est une vue d'un embout de prise de carburant, en coupe, d'une rampe de la technique antérieure,

la figure 7 est une vue en coupe d'un embout de prise de carburant d'une rampe, selon la présente invention.

Le procédé, selon la présente invention, de fabrication d'une rampe d'injection d'essence 1 comportant un tube creux 2 principal, d'axe longitudinal X-X plusieurs prises d'injecteur 3, d'axe Y-Y orthogonal à l'axe X-X, au moins un embout de prise de carburant 4 d'axe Z-Z perpendiculaire lui aussi à l'axe longitudinal X-X, et au moins un support d'ancrage 5 d'axe A-A perpendiculaire à l'axe longitudinal X-X, ainsi qu'un bouchon d'obturation 6 du tube principal 1 est tel que l'on frappe à chaud une billette métallique placée dans une matrice pour lui donner une forme primaire, pleine et longitudinale comportant des branchements transversaux, d'axes perpendiculaires à l'axe longitudinal X-X de la pièce primaire, et on usine la pièce primaire pour lui donner sa forme définitive.

Un tel procédé de fabrication selon la présente invention est remarquable, du fait que la rampe d'injection 1 ne comporte, à aucun endroit de soudure autre que celle du bouchon. Notamment, les connexions entre le tube creux principal 2, les prises d'injecteurs 3, les embouts de prise de carburant 4 ainsi que les supports d'ancrage 5, ne comportent pas de soudure, puisque la pièce est fabriquée par matriçage à chaud.

Le procédé est tel que la billette (non représentée) est constituée d'un alliage à base d'aluminium soudable, plus préférentiellement un alliage d'aluminium AG, AG3 ou AG4.

Le matriçage s'effectue à chaud.

La billette est frappée à chaud en plusieurs reprises.

Enfin, on usine la pièce qui a été matricée, de façon à donner la forme définitive aux prises d'injecteur 3, l'embout de prise de carburant 4 ainsi que les supports d'ancrage 5.

L'usinage comporte au moins, en outre, une étape de forage de la forme primaire. On introduit un foret dans une direction parallèle à l'axe longitudinal X-X, pour former une pièce longitudinale creuse 2 et on introduit un foret dans une direction perpendiculaire à l'axe X-X pour usiner les prises d'injecteur et les prises de carburant.

Le procédé est tel que l'on effectue ensuite l'usinage par ébavurage électrolytique ou chimique pour supprimer toute la matière qui est en trop.

Enfin, lorsque l'on a effectué les forages ainsi que l'ébavurage électrolytique ou chimique, on forme un bouchon soudé 6 à l'extrémité de la pièce longitudinale par laquelle on a introduit le foret.

On obtient ainsi une rampe 1 qui comporte, de préférence une pièce longitudinale creuse 2, d'axe X-X, deux embouts de prise de carburant 4, d'axes Z-Z, quatre prises d'injecteurs 3, d'axes Y-Y, parallèles aux axes Z-Z et perpendiculaires à l'axe X-X, et de préférence cinq supports d'ancrage 5, d'axes A-A perpendiculaires à l'axe longitudinal X-X. La rampe d'injection de carburant, selon la présente invention est caractérisée par le fait que les intersections de la pièce longitudinale creuse 2 et des pièces transversales 3, 4 et 5 sont arrondies intérieurement et extérieurement.

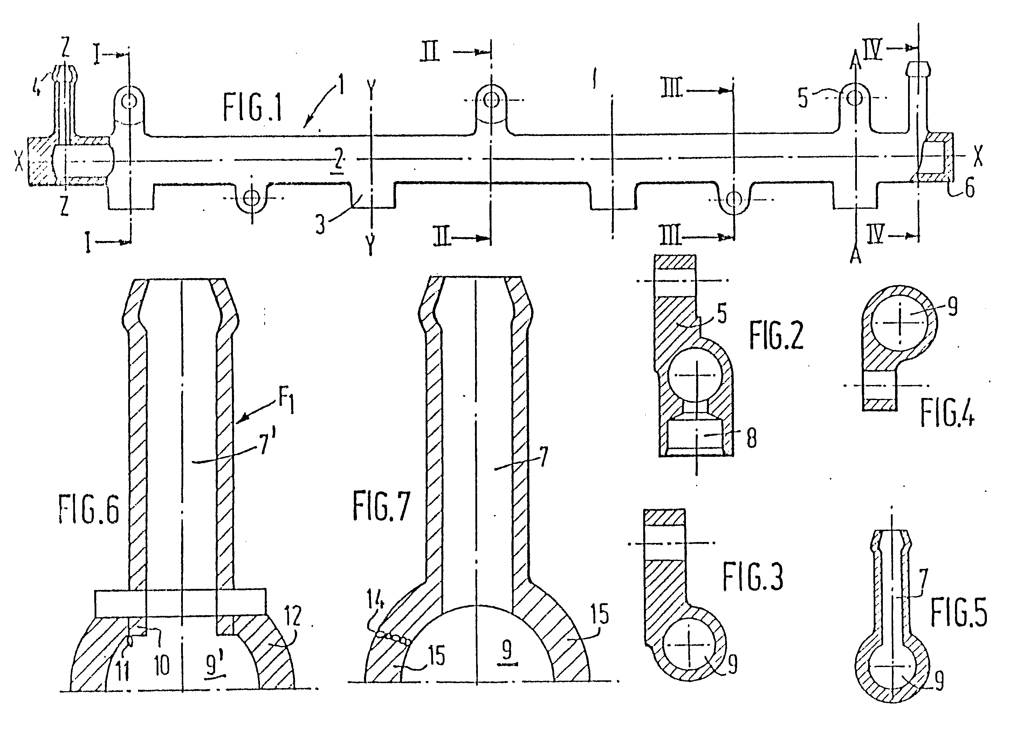

Comme on peut le voir, plus particulièrement sur les figures 2 à 5 et 7, les intersections des embouts 4, plus particulièrement les intersections des conduits 7 des embouts 4 de prise de carburant, ou des conduites 8 des prises d'injecteurs 5, avec le conduit 9 du tube creux 2 sont arrondies.

Sur la figure 6, on a représenté l'intersection du conduit 7' de l'embout de prise de carburant d'une rampe d'injection selon la technique antérieure avec le conduit 9' du tube creux principal d'une telle rampe d'injection de la technique antérieure. On voit nettement que l'intersection entre le conduit 7' et le conduit 9' n'est pas de forme arrondie et qu'il existe un surplus de matière 10 qui peut être un piège à impuretés. Ces impuretés peuvent ensuite se détacher pour voyager à travers le conduit 9' et boucher les prises d'injecteurs de la rampe de la technique antérieure.

Sur la figure 6, on a aussi représenté un effet de crête 11 provenant de la protection électrolytique et qui est susceptible de se détacher et ainsi de venir boucher les prises d'injecteurs. Les saillies internes 10 de la technique antérieure sont prévues pour venir en butée sur la paroi 12 lorsque l'embout de prise de carburant est soumis à une force F1, lors d'un choc par exemple. Ces saillies internes 10 qui viennent en butée sur la paroi 12 permettant d'éviter que l'embout de prise de carburant ne se couche, sous l'action du choc.

Au contraire, selon la présente invention, les intersections entre les embouts de prise de carburant et le tube interne 2 ne sont plus soudées, les risques de rupture sont donc réduits.

Les saillies internes 10 de la technique antérieure sont sources de turbulence du carburant, ce qui entraîne un mauvais fonctionnement de la rampe d'injection de carburant de la technique antérieure.

Selon la présente invention, les molécules 14 qui forment la paroi 15 de la rampe d'injection 1 sont très fines du fait que la pièce a été matricée à chaud.

La rampe, selon la présente invention, est donc monobloc, à l'exception du bouchon 6 qui est soudé. Par conséquent, la pièce ne comporte qu'une seule soudure pour obturer la pièce longitudinale 2, ou tube principal.

La rampe d'injection de carburant selon l'invention est remarquable, du fait que son poids est moitié environ du poids d'une rampe en acier soudé, ayant la même forme. Ainsi, la rampe, selon l'invention comporte un avantage certain, qui est la diminution du poids total du moteur. Par ailleurs, la rampe est dépourvue de revêtement de protection, puisqu'elle est en un alliage d'aluminium inoxydable. Là encore, elle présente l'avantage de ne pas nécessiter de traitement de décapage, ni de revêtement supplémentaire, ce qui entraîne une économie de coût de fabrication.

**Revendication**

Procédé de fabrication d'une rampe d'injection (1) de carburant comportant un tube creux (2) principal, s'étendant longitudinalement, plusieurs prises d'injecteur (3), au moins un et généralement plusieurs supports d'ancrage (5), au moins un et généralement deux embouts de prise de carburant (4) et un bouchon d'obturation (6) du tube principal (2) fixé sur celui-ci, caractérisé par le fait qu'il comporte la combinaison d'étapes successives suivantes : on frappe d'abord à chaud une billette en alliage d'aluminium placée dans une matrice, pour lui donner une forme primaire pleine longitudinale, comportant plusieurs branchements transversaux d'axes perpendiculaires à l'axe longitudinal de la forme primaire ; puis, on usine la pièce primaire pour lui donner sa forme définitive, y compris en forant la pièce primaire selon son axe longitudinal et les branchements transversaux pour former respectivement le tube creux (2), les prises et embouts (3, 4) ; on réalise un ébavurage électrolytique ou chimique ; enfin on soude le bouchon (6) dans le même alliage que le tube creux (2) afin d'obturer celui-ci à son extrémité longitudinale par laquelle on a introduit le foret de manière à réaliser une rampe d'injection monobloc.

**Claim**

Method of manufacturing a fuel line (1) having a main hollow tube (2) extending longitudinally, several injector inlets (3), at least one and in general several anchoring supports (5), at least one and in general two fuel inlet nozzles (4) and a plug (6) for closing off the main tube (2) and fixed to the latter, characterised in that it comprises the combination of the following successive steps : first, a billet of aluminium alloy placed in a die is hot-struck to give it a primary, solid longitudinal shape comprising several transverse branches of axes perpendicular to the longitudinal axis of the primary shape ; then, the primary part is machined to give it its final shape, including drilling the primary part along its longitudinal axis and the transverse branches to form respectively the hollow tube (2), the inlets and nozzles (3, 4) ; electrolytic or chemical fettling is carried out ; finally, the plug (6) is welded, in the same alloy as the hollow tube (2), in order to close off the latter at its longitudinal end through which the drill was introduced, in a manner such that a monobloc line is produced.

**Patentanspruch**

Verfahren zur Herstellung einer Kraftstoffleitung (1), die ein hohles Hauptrohr (2), welches sich in Längsrichtung erstreckt, mehrere Einspritzabzweigungen (3), mindestens einen und im allgemeinen mehrere Verankerungshalter (5), mindestens ein und im allgemeinen zwei Abzweigansatzstücke (4) für den Kraftstoff und ein am Hauptrohr (2) befestigten Sicherheitsverschluß (6) aufweist, gekennzeichnet durch die Kombination folgender aufeinanderfolgender Schritte : Zunächst wird ein Aluminiumlegierungsbarren, der in eine Matrize gelegt ist, warm geprägt, um ihm eine längsverlaufende volle Grundform zu verleihen, die mehrere Querabzweigungen, deren Achsen senkrecht zur Längsachse der Grundform sind, aufweist ; dann wird das Grundteil maschinell bearbeitet, um ihm seine endgültige Form zu geben, einschließlich dem Aufbohren des Grundteils in dessen Längsachse und der Querabzweigungen, um das hohle Rohr (2) bzw. die Abzweige und Ansätze (3, 4) zu bilden : dann wird ein elektrolytisches oder chemisches Entgraten vorgenommen ; danach wird der Verschluß (6) in derselben Legierung wie das hohle Rohr (2) angeschweißt, damit es an seinem Längsende verschlossen wird, durch welches der Bohrer eingeführt worden ist, um eine einstückige Kraftstoffleitung zu erhalten.

FIG.1 FIG.2 FIG.3 FIG.4 FIG.5 FIG.6 FIG.7